# EUROPEAN PATENT SPECIFICATION

(11) **EP 2 858 191 B1**
(45) Date of publication and mention of the grant of the patent: **29.06.2016**
(21) Application number: 13186845.7
(22) Date of filing: 01.10.2013
(51) Int. Cl.: H02G 3/08, H02G 3/12

(54) **Mounting box**
Anbringungskasten
Boîtier de montage

(43) Date of publication of application: 08.04.2015
(73) Proprietor: ABB Oy, 00380 Helsinki (FI)
(72) Inventor: Parviainen, Mauri, 06100 Porvoo (FI); Tervo, Pekka, 06100 Porvoo (FI); Andersson, Johan, 06100 Porvoo (FI)
(74) Representative: Kolster Oy Ab

(56) References cited:
- EP-A2- 1 942 567
- US-A1- 2009 218 128
- US-B1- 7 462 775

## Description

### FIELD OF THE INVENTION

The present invention relates to a mounting box according to preamble of independent claim 1.

A known mounting box is adapted to be installed between two parallel wall boards. When a depth of the known mounting box is less than a distance between the two wall boards, a separate box supporting member is used for filling the gap.

EP 1942567 discloses a mounting box according to the preamble of claim 1.

One of the problems associated with the above known mounting box is that space occupied by the separate box supporting member is a waste space.

### BRIEF DESCRIPTION OF THE INVENTION

An object of the present invention is to provide a mounting box which helps reducing the above mentioned waste space between wall boards. The objects of the invention are achieved by a mounting box which is characterized by what is stated in the independent claim. The preferred embodiments of the invention are disclosed in the dependent claims.

The invention is based on the idea of providing a mounting box with box connection means which has an operational state in which it is adapted to allow adjusting a depth of the mounting box in a first direction and prevent adjusting the depth in a second direction.

An advantage of the mounting box of the invention is its improved capability of utilizing space between the wall boards in depth direction.

### BRIEF DESCRIPTION OF THE DRAWINGS

In the following the invention will be described in greater detail by means of preferred embodiments with reference to the attached drawings, in which
Figure 1 shows a mounting box of a collapsible type in an expanded state;
Figure 2 shows the mounting box of Figure 1 in a collapsed state;
Figure 3 shows the mounting box of Figure 2 in partial cross section;
Figure 4 shows an enlargement of box connection means of the mounting box of Figure 3;
Figure 5 shows the box connection means of Figure 4 in a released state;
Figure 6 shows box connection means of an expandable type mounting box;
Figure 7 shows a detail of a mounting box having an integrated release member; and
Figure 8 shows the detail of Figure 7 in a situation where box connection means has been released by the integrated release member.

### DETAILED DESCRIPTION OF THE INVENTION

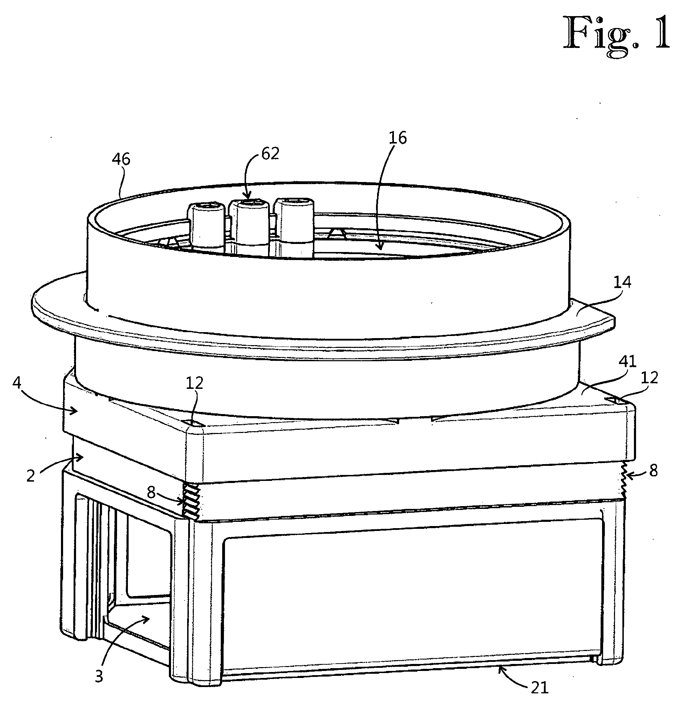

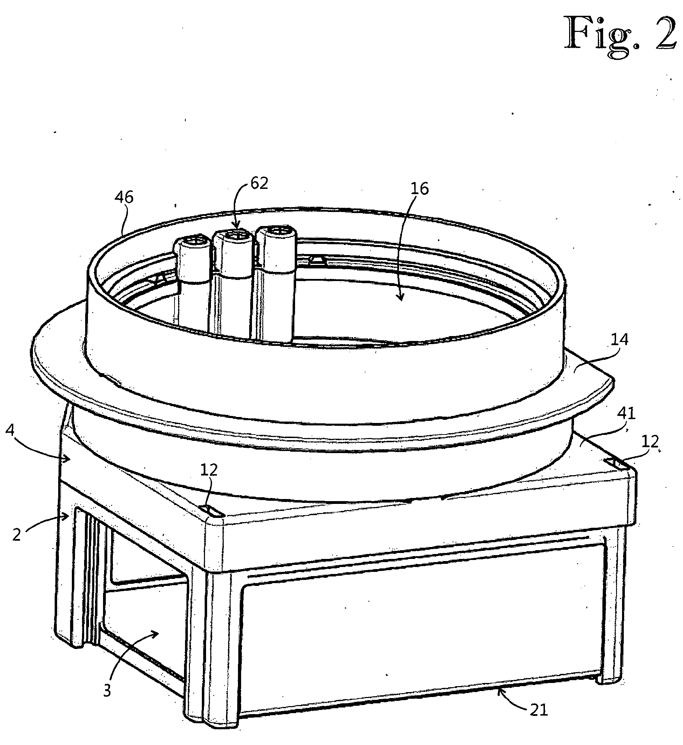

Figure 1 shows a mounting box of a collapsible type in an expanded state. Figure 2 shows the mounting box of Figure 1 in a collapsed state.

The mounting box of Figure 1 comprises a bottom part 2, a cover part 4, an adjustment collar 16, an additional flange element 14 and box connection means for connecting the bottom part 2 with the cover part 4 in order to provide a body part of the mounting box. The body part of the mounting box defines a mounting space 3 inside thereof, the mounting space 3 being adapted to accommodate at least one electrical component, such as a wall socket or a light switch.

The bottom part 2 comprises a back surface 21, and the cover part 4 comprises a flange surface 41. The back surface 21 of the bottom part 2 and the flange surface 41 of the cover part 4 are substantially parallel surfaces facing opposite directions and being located at a distance from one another. The back surface 21 of the bottom part 2 is adapted to abut on a surface of a first wallboard, and the flange surface 41 of the cover part 4 is adapted to abut on a surface of a second wallboard.

The box connection means enables adjusting volume of the mounting space 3. The box connection means has an operational state in which it is adapted to allow adjusting a distance between the back surface 21 of the bottom part 2 and the flange surface 41 of the cover part 4 in a first direction and prevent adjusting said distance in a second direction opposite to the first direction.

The adjustment collar 16 is pivotally mounted on an inside periphery of the cover part 4, the pivotal axis of the adjustment collar 16 being perpendicular to the plane defined by the flange surface 41. Pivoting the adjustment collar 16 with relation to the cover part 4 does not change position of the adjustment collar 16 in an axial direction parallel to the pivotal axis of the adjustment collar 16. The adjustment collar 16 comprises six screw apertures 62 adapted for fastening an electrical component to the adjustment collar 16 with screws. The adjustment collar 16 is a tubular element with a circular outer periphery. Due to its tubular shape the adjustment collar 16 provides an access into the mounting space 3.

The additional flange element 14 is a separate element. The additional flange element 14 is adapted for situations where distance between a front surface 46 of the cover part 4 and the flange surface 41 is too great. When a cover part is provided with an additional flange element the back surface of the bottom part is adapted to abut on a surface of a first wallboard, and an additional flange surface of the additional flange element is adapted to abut on a surface of a second wallboard.

A mounting box according to the invention may be provided with first gripping means for gripping a surface of a first wallboard. Alternatively or additionally a mounting box according to the invention may be provided with second gripping means for gripping a surface of a second wallboard. The first gripping means may be provided on the back surface of the bottom part. The second gripping means may be provided on a flange surface or, if an additional flange element is used, on an additional flange surface. The first gripping means and the second gripping means may comprise gripping protrusions. Alternatively the first gripping means and the second gripping means may comprise adhesive.

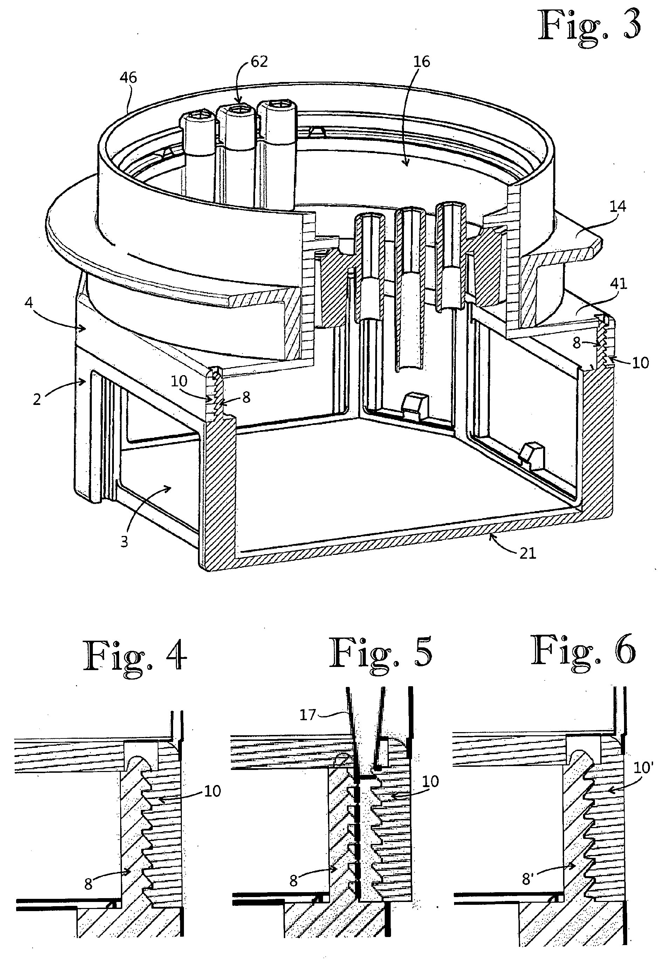

Figure 3 shows the mounting box of Figure 2 in partial cross section. Figure 3 shows that the box connection means comprises first connection means provided on the bottom part 2 and second connection means provided on the cover part 4. The first connection means comprises four toothed members 8, and the second connection means comprises a retainer member 10 for each toothed member 8. Each retainer member 10 is adapted to co-operate with corresponding toothed member 8 for providing the operational state. Two toothed members 8 and two retainer members 10 are visible in Figure 3.

Each toothed member 8 comprises a plurality of teeth. Also, each retainer member 10 comprises a plurality of teeth, the number of teeth on a retainer member 10 being the same as the number of teeth on corresponding toothed member 8. Teeth of each toothed member 8 and each retainer member 10 are unsymmetrical teeth in order to allow adjustment in the first direction and prevent adjustment in the second direction. One side of each tooth is a slanting side while the other side is substantially perpendicular to the first and second direction. Each tooth has a general form of a truncated triangle.

In an alternative embodiment box connection means comprises at least one toothed member provided on one of the first connection means and second connection means, and a retainer member for each toothed member provided on the other of the first connection means and second connection means. A retainer member may comprise significantly less teeth than corresponding toothed member. It is also possible to provide a retainer member with one or more latches instead of teeth, said one or more latches being adapted to co-operate with corresponding toothed member for providing the operational state.

Relative movement between the bottom part 2 and the cover part 4 is linear during adjustment of the volume of the mounting space 3. Said relative movement takes place in a direction substantially perpendicular with relation to planes defined by the back surface 21 of the bottom part 2 and the flange surface 41 of the cover part 4. The bottom part 2 and the cover part 4 do not rotate relative to each other during adjustment of the volume of the mounting space 3.

The mounting box of Figure 1 is in an expanded state, and the box connection means thereof is in the operational state. In the operational state the box connection means allow reducing a distance between the back surface 21 of the bottom part 2 and the flange surface 41 of the cover part 4 and prevent increasing said distance.

The mounting box of Figure 2 is in a collapsed state, and the box connection means thereof is in an end state. In the end state the box connection means has reached the end of its adjustment range and therefore the box connection means does not allow adjusting a distance between the back surface 21 of the bottom part 2 and the flange surface 41 of the cover part 4 neither in the first direction nor in the second direction. Herein "expanded state" refers to the state in which the volume of the mounting space 3 is in its maximum, and the "collapsed state" refers to the state in which the volume of the mounting space 3 is in its minimum.

The box connection means further has a released state in which it is adapted to allow changing a distance between the back surface 21 of the bottom part 2 and the flange surface 41 of the cover part 4 in the second direction. The released state enables transferring the box connection means from the end state to the operational state.

Figure 4 shows an enlargement of the box connection means of the mounting box of Figure 3, the box connection means being in an end state. Figure 5 shows the box connection means of Figure 4 in a released state in which teeth of the toothed member 8 have been separated from the teeth of the retainer member 10 by a tool 17. The tool 17 has been pushed between the toothed member 8 and the retainer member 10 through a release opening provided in the cover part. The separation of the toothed member 8 and the retainer member 10 is enabled by flexibility of the first connection means and second connection means. The released state of the box connection means makes it possible to restore the mounting box of Figure 2 to the expanded state shown in Figure 1.

The box connection means of the mounting box of Figure 1 comprises four release openings 12 in the cover part 4. Two of the release openings 12 are visible in Figure 1. Each release opening 12 is adapted to receive a release tool such as a tip of a screwdriver. In an alternative embodiment box connection means may comprise one or more release openings in the cover part, each release opening being adapted to enable pushing a tool between a toothed member of the box connection means and corresponding retainer member for transferring the box connection means from the operational state to the released state.

Figure 6 shows box connection means of an expandable type mounting box. Except for the box connection means the expandable type mounting box may be similar to the collapsible type mounting box shown in Figure 1. The box connection means shown in Figure 6 comprises first connection means provided on the bottom part and second connection means provided on the cover part. The first connection means comprises a toothed member 8', and the second connection means comprises a retainer member 10' adapted to co-operate with the toothed member 8' for providing an operational state of the box connection means.

Teeth on the toothed member 8' are substantially mirror images of the teeth on the toothed member 8 of Figure 4. Correspondingly, teeth on the retainer member 10' are substantially mirror images of the teeth on the retainer member 10 of Figure 4.

The box connection means shown in Figure 6 is in the operational state and corresponding mounting box is in a collapsed state. In the operational state the box connection means of Figure 6 allow increasing a distance between the back surface of the bottom part and the flange surface of the cover part and prevent decreasing said distance. The box connection means shown in Figure 6 may be transferred to a released state in which it is adapted to allow decreasing the distance between the back surface of the bottom part and the flange surface of the cover part. The released state enables transferring the box connection means from the end state to the operational state, the end state being an expanded state. The released state may be provided by separating the teeth of the toothed member 8' from the teeth of the retainer member 10' by a tool.

Herein "expandable type" refers to a mounting box whose mounting space volume may be increased while the box connection means is in the operational state. Correspondingly, "collapsible type" refers to a mounting box whose mounting space volume may be decreased while the box connection means is in the operational state.

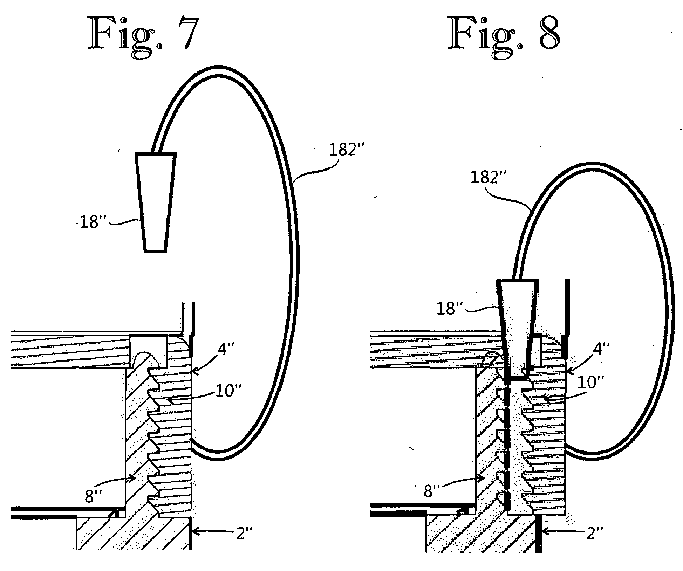

Figure 7 shows a detail of a mounting box having an integrated release member 18". Figure 7 is a partial cross section. The integrated release member 18" is adapted to be pushed between a toothed member 8" and a retainer member 10" for transferring box connection means from the operational state to the released state. Said pushing may be realized by a finger. The integrated release member 18" is connected to a cover part 4" of the mounting box by a flexible connecting member 182". The integrated release member 18" and the flexible connecting member 182" are integrated with the cover part 4". It is possible to manufacture the integrated release member 18", the flexible connecting member 182" and the cover part 4" with a single injection moulding process from one material such as plastic.

In Figure 8 the integrated release member 18" has been pushed between the toothed member 8" and the retainer member 10" through a release opening provided in the cover part 4", and the box connection means is in the released state. The flexible connecting member 182" has bent and still connects the integrated release member 18" to the cover part 4" of the mounting box.

In the embodiment of Figure 7 the integrated release member 18" is connected to a cover part of the mounting box. Alternatively an integrated release member may be connected to a bottom part of a mounting box.

A mounting box may comprise several release members. Connecting the release members to a bottom part or cover part helps keeping the release members safe. Alternatively release members may be separate components which are not connected to bottom part or cover part of a mounting box.

It will be obvious to a person skilled in the art that the inventive concept can be implemented in various ways. The invention and its embodiments are not limited to the examples described above but may vary within the scope of the claims.

## Claims

1. A mounting box comprising:
a bottom part (2) comprising a back surface (21);
a cover part (4) comprising a flange surface (41);
box connection means comprising first connection means provided on the bottom part (2) and second connection means provided on the cover part (4), the box connection means being adapted for connecting the bottom part (2) with the cover part (4) in order to provide a body part of the mounting box, the body part of the mounting box defining a mounting space (3) inside thereof, the mounting space (3) being adapted to accommodate at least one electrical component, **characterized in that** the box connection means has an operational state in which it is adapted to allow adjusting a distance between the back surface (21) of the bottom part (2) and the flange surface (41) of the cover part (4) in a first direction and prevent adjusting said distance in a second direction opposite to the first direction, and the box connection means comprises at least one toothed member (8) provided on one of the first connection means and second connection means, and a retainer member (10) for each toothed member (8) provided on the other of the first connection means and second connection means, each retainer member (10) being adapted to co-operate with corresponding toothed member (8) for providing the operational state.

2. A mounting box according to claim 1, **characterized in that** the box connection means further has a released state in which it is adapted to allow changing a distance between the back surface of the bottom part (2) and the flange surface (41) of the cover part (4) in the second direction.

3. A mounting box according to claim 2, **characterized in that** the mounting box further comprises at least one release member (18") adapted to be pushed between the toothed member (8") and the retainer member (10") for transferring the box connection means from the operational state to the released state.

4. A mounting box according to claim 3, **characterized in that** each release member (18") is connected to the bottom part (2") or cover part (4") by a corresponding flexible connecting member (182").

5. A mounting box according to claim 4, **characterized in that** each release member (18") and corresponding flexible connecting member (182") are integrated with the bottom part (2") or cover part (4") to which the release member (18") is connected.

6. A mounting box according to claim 2, **characterized in that** the box connection means comprises at least one release opening (12) in the cover part (4), each release opening (12) being adapted to enable pushing a tool (17) between a toothed member (8) of the box connection means and corresponding retainer member (10) for transferring the box connection means from the operational state to the released state.

7. A mounting box according to any one of preceding claims, **characterized in that** each toothed member (8) and retainer member (10) comprises a plurality of teeth.

8. A mounting box according to any one of preceding claims, **characterized in that** the mounting box further comprises an adjustment collar (16) pivotally mounted on an inside periphery of the cover part (4), the adjustment collar (16) comprising at least one screw aperture (62) adapted for fastening an electrical component to the adjustment collar (16) with a screw.

## Patentansprüche

1. Montagekasten mit:
einem Unterteil (2), das eine Rückfläche (21) aufweist;
einem Deckelteil (4), das eine Flanschfläche (41) aufweist;
einem Kastenverbindungsmittel, das ein auf dem Unterteil (2) vorgesehenes erstes Verbindungsmittel und ein auf dem Deckelteil (4) vorgesehenes zweites Verbindungsmittel aufweist, welches Kastenverbindungsmittel angepasst ist, das Unterteil (2) mit dem Deckelteil (4) zu verbinden, um ein Rahmenteil des Montagekastens bereitzustellen, welches Rahmenteil des Montagekastens darin einen Montageraum (3) definiert, welcher Montageraum (3) angepasst ist, zumindest eine elektrische Komponente zu enthalten, **dadurch gekennzeichnet, dass** das Kastenverbindungsmittel einen Betriebszustand hat, in dem es angepasst ist, die Einstellung eines Abstandes zwischen der Rückfläche (21) des Unterteils (2) und der Flanschfläche (41) des Deckelteils (4) in einer ersten Richtung zu erlauben und die Einstellung des besagten Abstandes in einer der ersten Richtung entgegengesetzten zweiten Richtung zu verhindern, und das Kastenverbindungsmittel zumindest ein gezahntes Glied (8) auf dem einen des ersten Verbindungsmittels und zweiten Verbindungsmittels und ein Halteglied (10) für jedes gezahnte Glied (8) auf dem anderen des ersten Verbindungsmittels und zweiten Verbindungsmittels aufweist, wobei jedes Halteglied (10) angepasst ist, mit dem entsprechenden gezahnten Glied (8) zusammenzuwirken, um den Betriebszustand bereitzustellen.

2. Montagekasten nach Patentanspruch 1, **dadurch gekennzeichnet, dass** das Kastenverbindungsmittel ferner einen ausgelösten Zustand hat, in dem es angepasst ist, die Änderung eines Abstandes zwischen der Rückfläche des Unterteils (2) und der Flanschfläche (41) des Deckelteils (4) in der zweiten Richtung zu erlauben.

3. Montagekasten nach Patentanspruch 2, **dadurch gekennzeichnet, dass** der Montagekasten ferner zumindest ein Auslöseglied (18") aufweist, das angepasst ist, zwischen das gezahnte Glied (8") und das Halteglied (10") eingeschoben zu werden, um das Kastenverbindungsmittel von dem Betriebszustand in den ausgelösten Zustand zu versetzen.

4. Montagekasten nach Patentanspruch 3, **dadurch gekennzeichnet, dass** jedes Auslöseglied (18") durch ein entsprechendes flexibles Verbindungsglied (182") mit dem Unterteil (2") oder dem Deckelteil (4") verbunden ist.

5. Montagekasten nach Patentanspruch 4, dadurch **gekenn**- **zeichnet**, dass jedes Auslöseglied (18") und das entsprechende flexible Verbindungsglied (182") in das Unterteil (2") oder das Deckelteil (4") integriert sind, mit dem das Auslöseglied (18") verbunden ist.

6. Montagekasten nach Patentanspruch 2, **dadurch gekennzeichnet, dass** das Kastenverbindungsmittel zumindest eine Auslöseöffnung (12) im Deckelteil (4) aufweist, wobei jede Auslöseöffnung (12) angepasst ist, das Einschieben eines Werkzeugs (17) zwischen ein gezahntes Glied (8) des Kastenverbindungsmittels und das entsprechende Halteglied (10) zu ermöglichen, um das Kastenverbindungsmittel von dem Betriebszustand in den ausgelösten Zustand zu versetzen.

7. Montagekasten nach einem der vorhergehenden Patentansprüche, **dadurch gekennzeichnet, dass** jedes gezahnte Glied (8) und Halteglied (10) mehrere Zähne aufweisen.

8. Montagekasten nach einem der vorhergehenden Patentansprüche, **dadurch gekennzeichnet, dass** der Montagekasten ferner einen Einstellkragen (16) aufweist, der auf einem Innenumfang des Deckelteils (4) drehbar montiert ist, welcher Einstellkragen (16) zumindest eine Schraubenöffnung (62) aufweist, die angepasst ist, eine elektrische Komponente am Einstellkragen (16) mit einer Schraube zu befestigen.

## Revendications

1. Boîtier de montage comprenant :
une partie inférieure (2) comprenant une surface arrière (21) ;
une partie de couvercle (4) comprenant une surface de bride (41) ;
des moyens de liaison de boîtier comprenant des premiers moyens de liaison prévus sur la partie inférieure (2) et des deuxièmes moyens de liaison prévus sur la partie de couvercle (4), les moyens de liaison du boîtier étant adaptés pour relier la partie inférieure (2) avec la partie de couvercle (4) afin de fournir une partie de corps du boîtier de montage, la partie de corps du boîtier de montage définissant un espace de montage (3) à l'intérieur de celui-ci, l'espace de montage (3) étant adapté pour recevoir au moins un composant électrique, **caractérisé en ce que** les moyens de liaison du boîtier présentent un état de fonctionnement dans lequel ils sont adaptés pour permettre le réglage d'une distance entre la surface arrière (21) de la partie inférieure (2) et la surface de bride (41) de la partie de couvercle (4) dans une première direction et empêcher le réglage de ladite distance dans une deuxième direction opposée à la première direction, et les moyens de liaison du boîtier comprennent au moins un élément denté (8) prévu sur l'un des premiers moyens de liaison et des deuxièmes moyens de liaison, et un élément de retenue (10) pour chaque élément denté (8) prévu sur l'autre des premiers moyens de liaison et des deuxièmes moyens de liaison, chaque élément de retenue (10) étant adapté à coopérer avec l'élément denté (8) correspondant pour fournir l'état de fonctionnement.

2. Boîtier de montage selon la revendication 1, **caractérisé en ce que** les moyens de liaison du boîtier comprennent en outre un état de libération dans lequel ils sont adaptés pour permettre la modification d'une distance entre la surface arrière de la partie inférieure (2) et la surface de bride (41) de la partie de couvercle (4) dans la deuxième direction.

3. Boîtier de montage selon la revendication 2, **caractérisé en ce que** le boîtier de montage comprend en outre au moins un élément de libération (18") adapté pour être poussé entre l'élément denté (8") et l'élément de retenue (10") pour passer les moyens de liaison du boîtier d'un état de liaison vers un état de libération.

4. Boîtier de montage selon la revendication 3, **caractérisé en ce que** chaque élément de libération (18") est relié à la partie inférieure (2") ou partie de couvercle (4") par un élément de liaison flexible (182") correspondant.

5. Boîtier de montage selon la revendication 4, **caractérisé en ce que** chaque élément de libération (18") et élément de liaison flexible (182") correspondant est intégré à la partie inférieure (2") ou partie de couvercle (4") à laquelle l'élément de libération (18") est relié.

6. Boîtier de montage selon la revendication 2, **caractérisé en ce que** les moyens de liaison du boîtier comprennent au moins une ouverture de dégagement (12) dans la partie de couvercle (4), chaque ouverture de dégagement (12) étant adaptée pour permettre de pousser un instrument (17) entre un élément denté (8) des moyens de liaison du boîtier et un élément de retenue (10) correspondant pour passer les moyens de liaison du boîtier de l'état de fonctionnement vers l'état de libération.

7. Boîtier de montage selon l'une quelconque des revendications précédentes, **caractérisé en ce que** chaque élément denté (8) et élément de retenue (10) comprend une pluralité de dents.

8. Boîtier de montage selon l'une quelconque des revendications précédentes, **caractérisé en ce que** le boîtier de montage comprend en outre une bague de réglage (16) montée pivotante sur une périphérie intérieure de la partie de couvercle (4), la bague de réglage (16) comprenant au moins une ouverture filetée (62) adaptée pour la fixation d'un composant électrique à la bague de réglage (16) avec une vis.
